# EUROPEAN PATENT APPLICATION

(11) **EP 4 717 421 A1**
(43) Date of publication of application: **01.04.2026**
(21) Application number: 24830752.2
(22) Date of filing: 25.06.2024
(51) Int. Cl.: B26B 19/38, B26B 19/04, B23P 15/40

(54) **SHAVING BLADE AND MANUFACTURING METHOD THEREFOR**

(30) Priority: 29.06.2023 CN 202310790653
(71) Applicant: Zhejiang Haishun Electric Enterprises Ltd, Wenzhou, Zhejiang 325024 (CN)
(72) Inventor: ZHONG, Haiyong, Wenzhou, Zhejiang 325024 (CN)
(74) Representative: advotec.
(86) International application number: PCT/CN2024/101278
(87) International publication number: WO 2025/002112

(57) **Abstract**

A shaving blade is disclosed and comprises a blade body (1) and a plurality of cutting teeth (2) arranged at intervals on the blade body (1), wherein a cutting slot (3) is formed between every two adjacent cutting teeth (2), and a wall surface of the cutting slot (3) extends from a lower end surface of each cutting tooth toward an upper end surface thereof and forms a continuous curved surface. The wall surface of the shaving blade is not prone to stress concentration, so it would not adversely affect the rigidity of the overall structure, and can effectively reduce the phenomena of deformation, blade jumping and temperature increase during the shaving process. Meanwhile, during heat treatment, the continuous curved surface is heated more uniformly during heating and undergoes more uniform temperature change during cooling, so it is not prone to deformation during heat treatment, which effectively solves the problem of poor reliability of the side walls of cutting teeth of existing shaving blades. A method for manufacturing the shaving blade is also disclosed, wherein the plurality of cutting teeth is cut by using a cutting wheel (4), and a diameter of the cutting wheel is less than or equal to 80 mm.

## Description

### CROSS REFERENCE TO RELATED APPLICATIONS

The present application claims priority to the Chinese patent application No. 202310790653.3 filed on June 29, 2023 to the CNIPA, and entitled "SHAVING BLADE AND METHOD FOR MANUFACTURING THEREOF", the entire content of which is incorporated herein by reference.

### TECHNICAL FIELD

The present application relates to the technical field of shaving blades, and in particular relates to a shaving blade and a method for manufacturing thereof.

### BACKGROUND

A shaving blade is a main working component in a shaver or hair trimmer. Existing shavers or hair trimmers mainly include two types: rotary type and reciprocating type. By means of the rotation or oscillation of the shaving blade at the head of the shaver or hair trimmer, the shaving blade moves relative to a fixed blade net to cut off the hair entering the space between the shaving blade and the fixed blade net. The cutting end of the shaving blade is usually provided with a plurality of cutting teeth at intervals, and the reliability of the cutting teeth during the hair cutting process will affect the hair cutting effect.

At present, the side walls of cutting teeth of existing shaving blades are usually formed by interconnecting multiple sections of wall surfaces. The side walls of the cutting teeth are the side walls of the cutting slots. When the side walls of the cutting teeth extend upward from bottom to top in the vertical direction, they are usually formed by interconnecting a plurality of planar surfaces at different angles, or by interconnecting curved surfaces and planar surfaces. Due to the sudden angle change at the connection of two adjacent surfaces, stress concentration will occur at the connection of two adjacent surfaces when the cutting teeth are in use, thereby adversely affecting the rigidity of the structure and easily causing problems such as deformation, blade jumping, and increased temperature. Meanwhile, during the heat treatment step in the manufacturing process of such side walls, they are also prone to uneven heating and deformation. Therefore, the side walls of cutting teeth of existing shaving blades still have the problem of poor reliability.

### SUMMARY OF THE INVENTION

In view of this, the present application provides a shaving blade and a manufacturing method thereof to solve the problem of poor reliability of the side walls of cutting teeth of existing shaving blades.

In a first aspect, the present application provides a shaving blade, comprising: a blade body; and a plurality of cutting teeth arranged at intervals on the blade body, wherein a cutting slot is formed between every two adjacent cutting teeth, and a wall surface of the cutting slot extends from a lower end surface of each cutting tooth toward an upper end surface thereof and forms a continuous curved surface.

In an optional embodiment, the wall surface of the cutting slot is formed by a plurality of arc surfaces that are continuously interconnected.

In an optional embodiment, the wall surface of the cutting slot intersects with the lower end surface of the cutting tooth to form a cutting edge, the included angle between a tangent line at each point on the cutting edge and the lower end surface of the cutting tooth is a cutting angle, the wall surface of the cutting slot intersects with a plane perpendicular to the lower end surface to form a tooth slot line, and a slope at each point on the tooth slot line relative to the lower end surface of the cutting tooth gradually increases along a direction away from the cutting edge, so that the cutting tooth maintains sharpness while having a corresponding thickness.

In an optional embodiment, the cutting angle corresponding to each point on the cutting edge is less than 75°.

In an optional embodiment, a direction from a mouth of the cutting slot to a bottom of the cutting slot is a first direction, and the cutting angle corresponding to each point on the cutting edge changes continuously along the first direction.

In an optional embodiment, the cutting angle corresponding to each point on the cutting edge gradually decreases along the first direction, or, the cutting angle corresponding to each point on the cutting edge first gradually decreases and then gradually increases along the first direction.

In an optional embodiment, the cutting edge has a shape of a continuous curve.

In a second aspect, the present application further provides a method for manufacturing a shaving blade, which is used for manufacturing the shaving blade described above. The manufacturing method comprises: manufacturing a blade body; and forming cutting teeth by cutting on the blade body with a cutting wheel; wherein a diameter of the cutting wheel is less than or equal to 80mm, a cutting slot is formed between every two adjacent cutting teeth, and a wall surface of the cutting slot extends from a lower end surface of each cutting tooth toward an upper end surface thereof and forms a continuous curved surface.

In an optional embodiment, in the step of forming the cutting teeth by cutting on the blade body with the cutting wheel, the cutting wheel cuts on the blade body to form the cutting slots, the cutting teeth are each formed between every two adjacent cutting slots, the cutting wheel is fed from a bottom of the cutting slot toward a mouth of the cutting slot, and the cutting wheel is moved along an inclined path toward a lower end of an end portion of each cutting tooth during the feeding process, and/or, a rotating speed of the cutting wheel is 3000r/min to 5000r/min, and a cutting feed speed of the cutting wheel is 0.1mm/min to 10mm/min.

In an optional embodiment, the step of manufacturing the blade body comprises: preparing a blank; and processing the blank into the blade body according to external dimensions of the blade body.

In an optional embodiment, the step of preparing the blank comprises: obtaining a hardness of the blank; if the hardness of the blank is greater than or equal to a preset hardness, the blank is formed into the blade body; if the hardness of the blank is less than the preset hardness, the blank is subjected to heat treatment and then formed into the blade body.

In an optional embodiment, if the hardness of the blank is less than the preset hardness, the step of subjecting the blank to heat treatment comprises: placing the blank in a heat treatment equipment, wherein a heat treatment temperature range applied to the blank by the heat treatment equipment is 850°C to 1300°C, and a heat preservation time is greater than or equal to 30min; and cooling the blank to a preset temperature range and then taking the blank out of the heat treatment equipment, wherein the preset temperature range is room temperature to 65°C.

In an optional embodiment, after the step of forming the cutting teeth by cutting on the blade body with the cutting wheel, the method further comprises: grinding surfaces of the cutting teeth to make the flatness and surface roughness of the surfaces of the cutting teeth reach a preset flatness and a preset surface roughness.

### Beneficial Effects

1. The wall surface of the cutting slot extends from the lower end surface of each cutting tooth toward the upper end surface thereof and forms a continuous curved surface. Compared with a wall surface of a cutting slot formed by interconnecting multiple planar surfaces or interconnecting curved surfaces and planar surfaces, the wall surface of such a structure is not prone to stress concentration, so it would not adversely affect the rigidity of the overall structure, and can effectively reduce the phenomena of deformation, blade jumping and temperature increase during the shaving process. Meanwhile, during heat treatment, the continuous curved surface is heated more uniformly during heating and undergoes more uniform temperature change during cooling, so it is not prone to deformation during heat treatment, which effectively solves the problem of poor reliability of the side walls of cutting teeth of existing shaving blades.
2. The slope of the tooth slot line is set to gradually increase along the direction away from the cutting edge. The slope of the part of the tooth slot line close to the cutting edge is small, making the cutting edge sharper. When the cutting tooth extends from the bottom surface to the top surface, the tooth width of the cutting tooth changes non-linearly, and the reduction rate of the tooth width is more gradual. Therefore, the two side walls of the cutting tooth will not intersect prematurely, the tooth width of the upper and middle parts of the cutting tooth is wider, and the overall tooth thickness is thicker, resulting in higher overall rigidity of the cutting tooth. In this way, the cutting angle of the cutting tooth can be made very small while ensuring the rigidity of the cutting tooth, which effectively solves the problem that it is difficult for existing shaving blades to make balance between sharpness and rigidity.
3. Since the rigidity of the cutting tooth 2 varies at different locations when the cutting angles are different at different locations, and the size of the cutting angle will directly affect the rigidity of the cutting tooth at the respective locations, in order to ensure the overall rigidity of the cutting tooth, the cutting angle changes continuously along the first direction. At a location where the rigidity of the cutting tooth is insufficient, the cutting angle is larger; at a location where the rigidity of the cutting tooth is higher, the cutting angle can be smaller.

### BRIEF DESCRIPTION OF THE DRAWINGS

To more clearly illustrate the technical solutions in the specific implementations of the present application or in the prior art, the drawings that are needed for describing the specific implementations or the prior art are briefly introduced below. Apparently, the drawings described below only represent some implementations of the present application, and those skilled in the art can obtain other drawings from these drawings without creative efforts.
FIG. 1 is a three-dimensional schematic diagram of a shaving blade according to an embodiment of the present application;
FIG. 2 is an enlarged schematic diagram of part A of the shaving blade shown in FIG. 1;
FIG. 3 is a front view of the shaving blade shown in FIG. 1;
FIG. 4 is a top view of the shaving blade shown in FIG. 1;
FIG. 5 is a cross-sectional view taken along line B-B of the shaving blade shown in FIG. 4;
FIG. 6 is a cross-sectional profile view of the cutting tooth of the shaving blade shown in FIG. 5;
FIG. 7 is a cross-sectional view taken along line C-C of the shaving blade shown in FIG. 4;
FIG. 8 is a cross-sectional profile view of the cutting tooth of the shaving blade shown in FIG. 7;
FIG. 9 is a cross-sectional view taken along line D-D of the shaving blade shown in FIG. 4;
FIG. 10 is a cross-sectional profile view of the cutting tooth of the shaving blade shown in FIG. 9;
FIG. 11 is a comparison diagram when the cutting angle of the cutting tooth of the shaving blade shown in FIG. 1 is relatively large;
FIG. 12 is a comparison diagram when the cutting angle of the cutting tooth of the shaving blade shown in FIG. 1 is relatively small;
FIG. 13 is a comparison diagram when the tooth slot line of the cutting tooth of the shaving blade shown in FIG. 1 is a continuous curve;
FIG. 14 is a comparison diagram of the trajectory of the cutting edge of the shaving blade shown in FIG. 1;
FIG. 15 is a schematic diagram of preliminary cutting of the method for manufacturing the shaving blade according to an embodiment of the present application;
FIG. 16 is a schematic diagram of further cutting of the method for manufacturing the shaving blade shown in FIG. 15;
FIG. 17 is a schematic diagram of further cutting of the method for manufacturing the shaving blade shown in FIG. 16;
FIG. 18 is a schematic diagram of further cutting of the method for manufacturing the shaving blade shown in FIG. 17;
FIG. 19 is a schematic diagram of further cutting of the method for manufacturing the shaving blade shown in FIG. 18;
FIG. 20 is a schematic diagram of further cutting of the method for manufacturing the shaving blade shown in FIG. 19;
FIG. 21 is a schematic diagram of further cutting of the method for manufacturing the shaving blade shown in FIG. 20.

### Reference numerals:

1, blade body; 2, cutting tooth; 201, cutting edge; 3, cutting slot; 301, tooth slot line; 4, cutting wheel.

### DETAILED DESCRIPTION

In order to make the purpose, technical solutions, and advantages of the embodiments of the present application clearer, the technical solutions in the embodiments of the present application will be clearly and completely described below with reference to the accompanying drawings in the embodiments of the present application, and apparently, the described embodiments only represent part of the embodiments of the present application, not all of them. Based on the embodiments described in the present application, all other embodiments obtainable by those skilled in the art without creative work fall within the scope of protection of the present application.

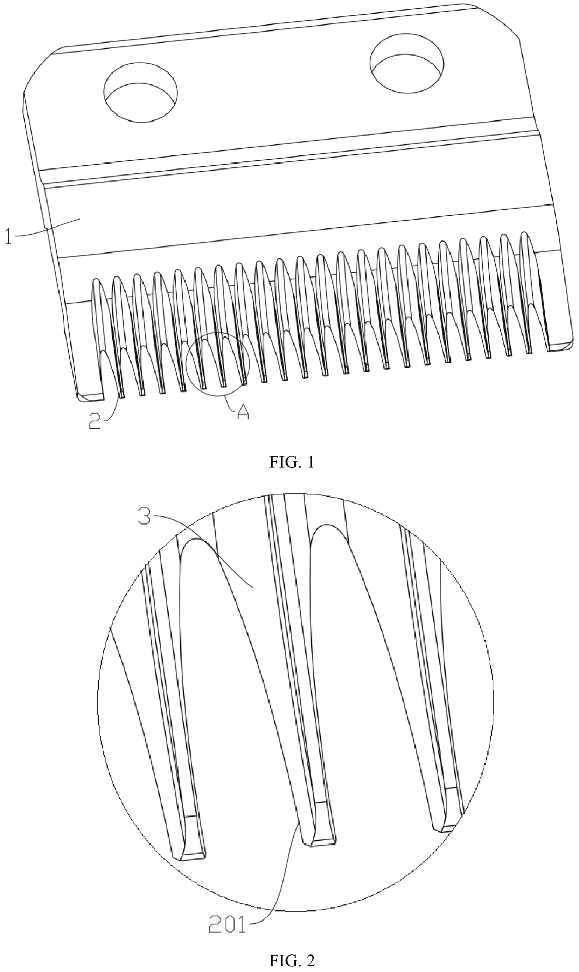

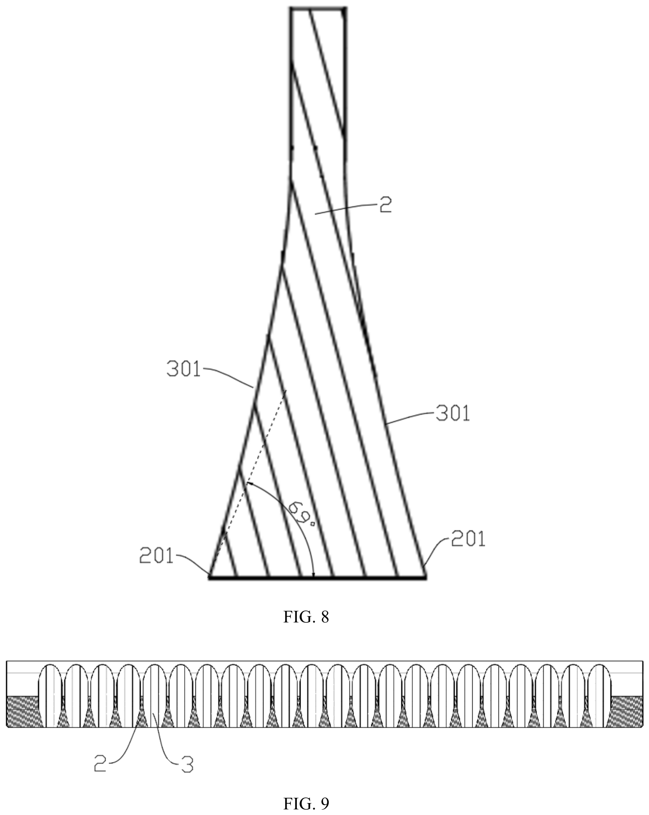

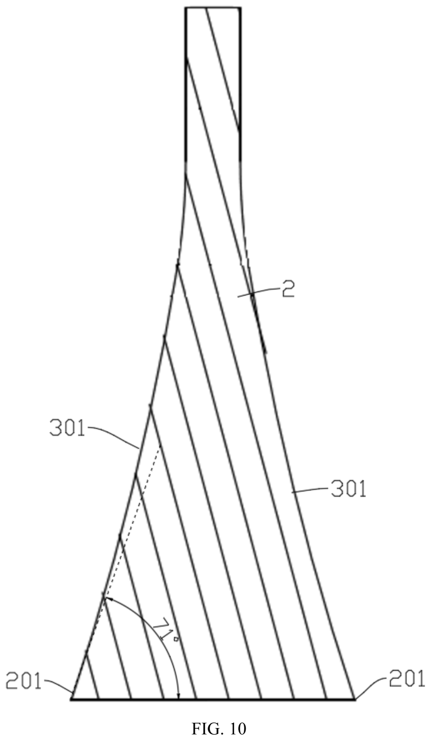

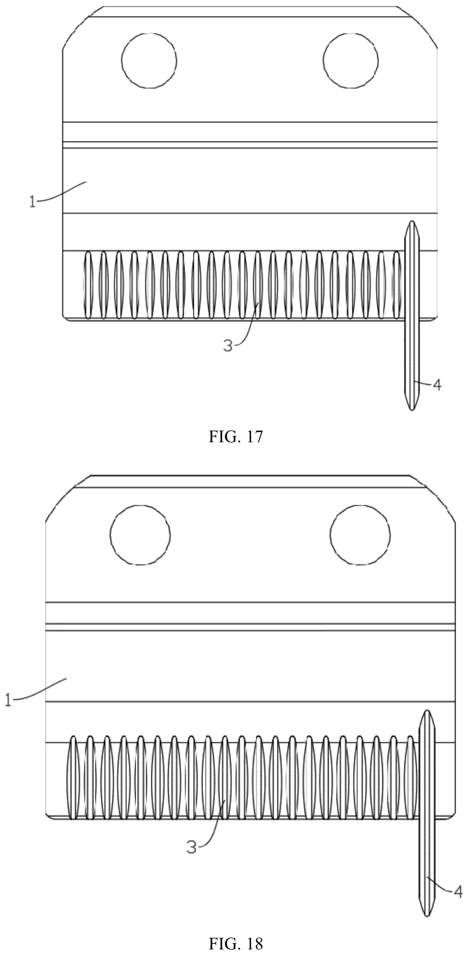

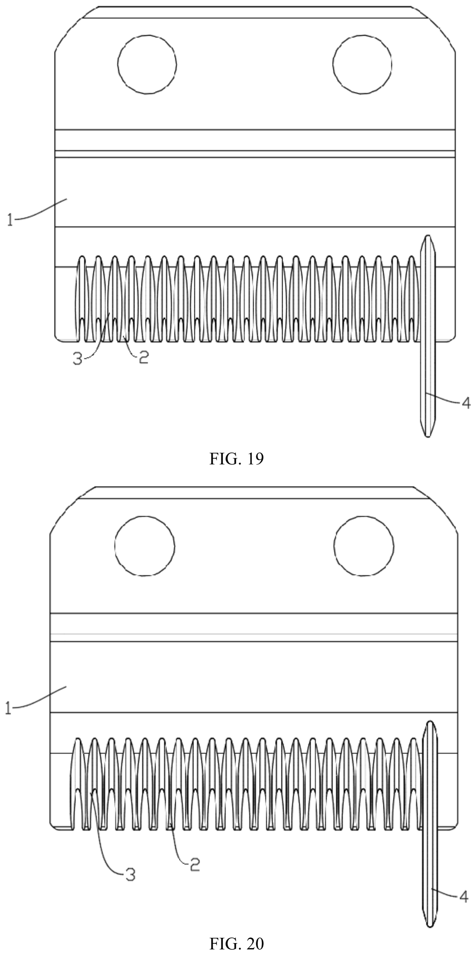

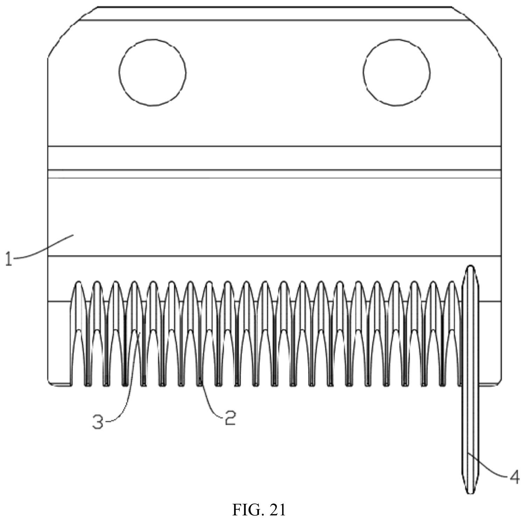

The embodiments of the present application will be described below with reference to FIGS. 1 to 21.

According to an embodiment of the present application, in a first aspect, a shaving blade is provided and comprises a blade body 1 and a plurality of cutting teeth 2. The plurality of cutting teeth 2 are arranged at intervals on the blade body 1, a cutting slot 3 is formed between every two adjacent cutting teeth 2, and a wall surface of the cutting slot 3 extends from a lower end surface of the each cutting tooth toward an upper end surface thereof and forms a continuous curved surface.

By applying the shaving blade of the present embodiment, the wall surface of the cutting slot 3 extends from the lower end surface of the each cutting tooth 2 toward the upper end surface thereof and forms a continuous curved surface. Compared with a wall surface of a cutting slot 3 formed by interconnecting multiple planar surfaces or interconnecting curved surfaces and planar surfaces, the wall surface of such a structure is not prone to stress concentration, so it would not adversely affect the rigidity of the overall structure, and can effectively reduce the phenomena of deformation, blade jumping and temperature increase during the shaving process. Meanwhile, during heat treatment, the continuous curved surface is heated more uniformly during heating and undergoes more uniform temperature change during cooling, so it is not prone to deformation during heat treatment, which effectively solves the problem of poor reliability of the side walls of cutting teeth of existing shaving blades.

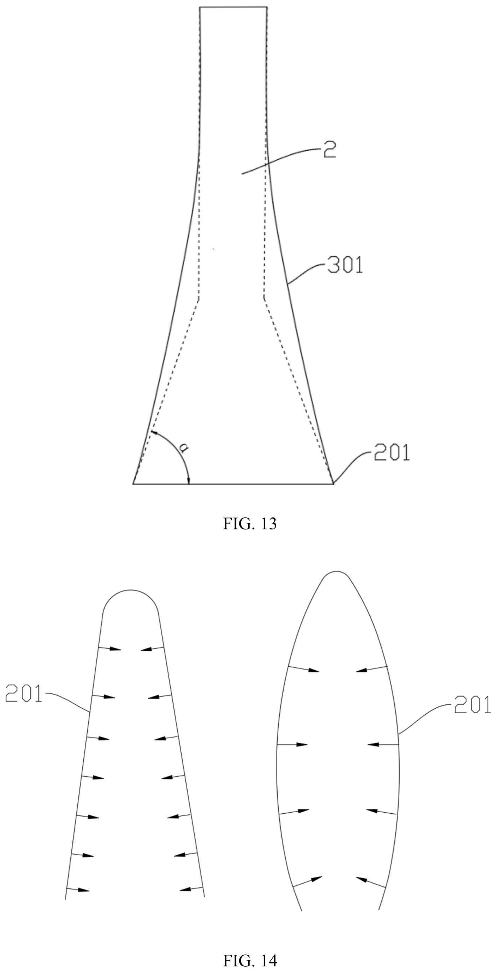

Specifically, as shown in FIG. 13, the dashed line part is the side wall of the cutting tooth in the related art, which is formed by interconnecting multiple wall surfaces at an angle to each other. The wall surface of the cutting slot 3 of the present embodiment not only has a wider tooth width at the corresponding location but also has a smoother wall surface change.

In the present embodiment, the wall surface of the cutting slot 3 is a plurality of continuously interconnected arc surfaces, which is easier to process and makes the transition of the wall surface of the cutting slot 3 smoother.

In the present embodiment, the wall surface of the cutting slot 3 intersects with the lower end surface of the cutting tooth 2 to form a cutting edge 201, the included angle between a tangent line at each point on the cutting edge 201 and the lower end surface of the cutting tooth 2 is a cutting angle, the wall surface of the cutting slot 3 intersects with a plane perpendicular to the lower end surface to form a tooth slot line 301, and a slope at each point on the tooth slot line 301 relative to the lower end surface of the cutting tooth 2 gradually increases along a direction away from the cutting edge 201, so that the cutting tooth 2 maintains sharpness while having a corresponding thickness.

Wherein, the corresponding thickness refers to the thickness of the cutting tooth 2 when the cutting tooth 2 is relatively sharp under the condition that the slope at each point on the tooth slot line 301 relative to the lower end surface of the cutting tooth 2 gradually increases along the direction away from the cutting edge 201. The specific angle value of the cutting angle is not limited here, as long as the cutting edge 201 can cut hair quickly and effectively.

Specifically, the slope of the tooth slot line 301 is set to gradually increase along the direction away from the cutting edge 201. The slope of the part of the tooth slot line 301 close to the cutting edge 201 is small, making the cutting edge 201 sharper. When the cutting tooth 2 extends from the bottom surface to the top surface, the tooth width of the cutting tooth 2 changes non-linearly, and the reduction rate of the tooth width is more gradual. Therefore, the two side walls of the cutting tooth 2 will not intersect prematurely, compared with the cutting tooth 2 in the related art, the tooth width of the upper and middle parts of the cutting tooth 2 of the present embodiment is wider, and the overall tooth thickness is thicker, resulting in higher overall rigidity of the cutting tooth 2. In this way, the cutting angle of the cutting tooth 2 can be made very small while ensuring the rigidity of the cutting tooth 2, which effectively solves the problem that it is difficult for existing shaving blades to make balance between sharpness and rigidity.

Specifically, in the related art, in order to ensure that the cutting tooth 2 has a certain thickness, its cutting angle is generally greater than 80°, and the side wall of the cutting tooth 2 is approximately perpendicular to the bottom surface of the cutting tooth 2, resulting in insufficient sharpness of the cutting edge 201 at the side wall of the cutting slot 3. Only the cutting edge 201 of the part of the cutting slot 3 close to the slot bottom is relatively sharp. When cutting hair, due to the insufficient sharpness at the bottom of the side wall of the cutting tooth 2, the hair is mainly cut off by the part of the cutting slot 3 close to the slot bottom, and the hair cutting effect of this type of cutting tooth 2 is poor. In contrast, the shaving blade of the present embodiment can make the cutting edge 201 at the side wall of the cutting slot 3 also relatively sharp, so that the entire cutting edge 201 can effectively cut off the hair, thereby greatly improving the hair cutting effect.

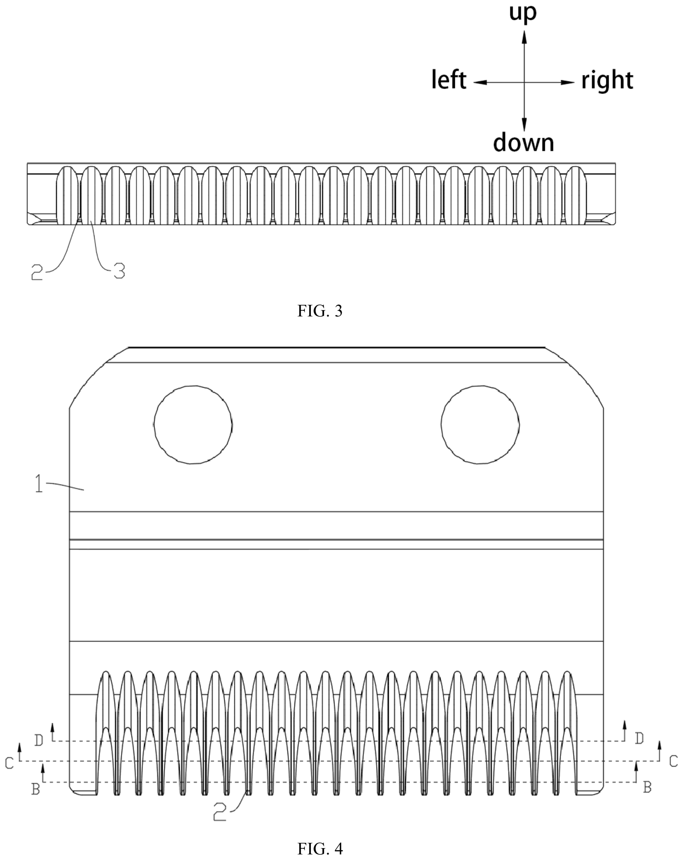

Wherein, the side walls of the cutting tooth 2 are the side walls of the cutting slot 3, referring to the wall surfaces on both sides of the cutting slot 3. The tooth width of the cutting tooth 2 refers to the width of a single cutting tooth 2 in the "left-right" direction indicated by the arrow in FIG. 3, and the tooth thickness of the cutting tooth 2 refers to the thickness of a single cutting tooth 2 in the "up-down" direction indicated by the arrow in FIG. 3.

In the present embodiment, the cutting angle corresponding to each point on the cutting edge 201 is less than 75°, so the entire cutting edge 201 can maintain a sharp state. When hairs just enter the cutting slot 3 and contact the cutting edge 201, cutting starts. A part of the uncut hairs contact the cutting edge 201 in the middle part of the cutting slot 3 to complete cutting thereof, and the cutting of the remaining hairs is completed cutting after contacting the cutting edge 201 at the slot bottom of the cutting slot 3, which can ensure that all the hairs entering the cutting slot 3 are completely cut off.

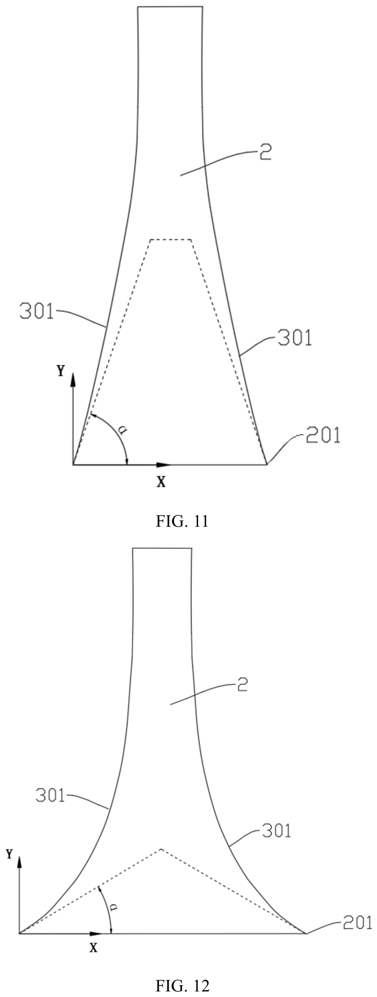

Further, as shown in FIGS. 11 and 12, both of which are cross-sections perpendicular to the extending direction of the cutting tooth 2. FIG. 11 shows the case when the cutting angle is relatively large, and FIG. 12 shows the case when the cutting angle is relatively small. The solid line part is the cutting tooth 2 with the non-linear tooth slot line 301 of the present embodiment, and the dashed line part is the cutting tooth 2 with the linear tooth slot line 301 in the related art. Wherein, α is the cutting angle, X is the tooth width, and Y is the tooth thickness. The extending direction of the cutting tooth 2 is the direction perpendicular to both the "up-down" direction and the "left-right" direction indicated by the arrows in FIG. 3.

The change of the tooth thickness of the cutting tooth 2 along with the change of the tooth width is specifically described below:
In FIG. 11, the cutting angle is 70.2°, and the changes of the non-linear tooth thickness and the linear tooth thickness are as shown in Table 1 below:

**Table 1**

| Tooth Width | Non-linear Tooth Thickness | Linear Tooth Thickness |
|---|---|---|
| 1.06 | 0 | 0 |
| 0.79 | 0.42 | 0.38 |
| 0.46 | 1.04 | 0.84 |
| 0.23 | 1.63 | 1.16 |

In FIG. 12, the cutting angle is 36.5°, and the changes of the non-linear tooth thickness and the linear tooth thickness are as shown in Table 2 below:

**Table 2**

| Tooth Width | Non-linear Tooth Thickness | Linear Tooth Thickness |
|---|---|---|
| 0.44 | 0 | 0 |
| 0.33 | 0.05 | 0.04 |
| 0.26 | 0.11 | 0.07 |
| 0.2 | 0.22 | 0.09 |

It can be seen from the above data that when the tooth width is the same, the thickness of the cutting tooth 2 with the non-linear tooth slot line 301 is greater than that of the cutting tooth 2 with the linear tooth slot line 301. Therefore, the rigidity of the cutting tooth 2 with the non-linear tooth slot line 301 is higher, and this phenomenon is more significant as the cutting angle becomes smaller. The structural advantage of the cutting tooth 2 of the present embodiment is more obvious when the sharpness of the cutting edge 201 is higher.

Wherein, the specific data of the tooth width and tooth thickness are not limited to any specific unit, as long as there is such a ratio; the above tables and data are illustrative examples of the non-linear tooth slot line 301 structure of the present embodiment, and are not limited to the above proportional relationships, which can be adjusted arbitrarily according to demands.

It should be noted that the specific change details of the non-linear change of the tooth slot line 301 in the present embodiment is not limited, and it can be a continuous curve or a polyline with multiple segments connected in sequence, as long as it can effectively improve the rigidity of the cutting tooth 2 when the cutting edge 201 is relatively sharp.

In the present embodiment, a direction from a mouth of the cutting slot 3 to a bottom of the cutting slot 3 is a first direction, and the cutting angle corresponding to each point on the cutting edge 201 changes continuously along the first direction. Since the rigidity of the cutting tooth 2 varies at different locations when the cutting angles are different at different locations, and the size of the cutting angle directly affects the rigidity of the cutting tooth 2 at the respective locations, in order to ensure the overall rigidity of the cutting tooth 2, the cutting angle changes continuously along the first direction. At a location where the rigidity of the cutting tooth 2 is insufficient, the cutting angle is larger; at a location where the rigidity of the cutting tooth 2 is higher, the cutting angle can be smaller.

Wherein, the mouth of the cutting slot 3 refers to a location on the cutting slot 3 close to the end of the cutting tooth 2, and the bottom of the cutting slot 3 refers to a location on the cutting slot 3 close to the root of the cutting tooth 2.

Specifically, the variation range of the cutting angle is 5° to 75°.

In the present embodiment, the cutting angle corresponding to each point on the cutting edge 201 gradually decreases along the first direction. When the overall rigidity of the cutting tooth 2 gradually decreases along the first direction, the cutting angle close to the mouth of the cutting slot 3 is larger to ensure the rigidity of the end of the cutting tooth 2, and at the same time, since the rigidity close to the root of the cutting tooth 2 is larger, the cutting angle close to the bottom of the cutting slot 3 can be smaller, making it sharper. While ensuring the overall rigidity of the cutting tooth 2 as much as possible, the cutting angle of the cutting edge 201 is made as small as possible to keep the cutting edge 201 as sharp as possible.

In the present embodiment, the cutting angle corresponding to each point on the cutting edge 201 first gradually decreases and then gradually increases along the first direction.

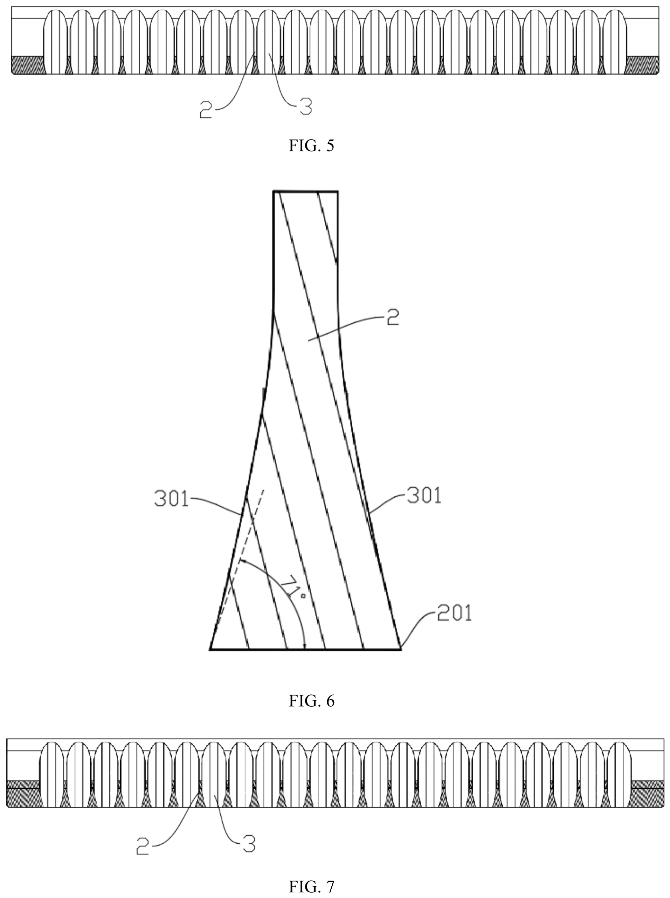

Specifically, as shown in FIGS. 6, 8, and 10, they are cross-sections of the cutting tooth 2 at different locations along the first direction. When the end of the cutting tooth 2 is relatively thick, the rigidity change of the cutting tooth 2 along the first direction first decreases and then increases. Therefore, this arrangement of the cutting angle can ensure the overall rigidity of the cutting tooth 2 while keeping the cutting edge 201 as sharp as possible.

In the present embodiment, the cutting edge 201 has a shape of a continuous curve, which can effectively reduce stress concentration at the cutting edge 201 to ensure the rigidity at the cutting edge 201.

Specifically, the contour of the wall surface of the cutting slot 3 in a plane along the direction parallel to the shear surface is at least partially set as a parabola. Correspondingly, at least a part of the cutting edge 201 is parabolic. Such a smoothly transitioning wall surface of the cutting slot 3 can ensure the rigidity of the blade, especially the rigidity of each point on the outer periphery of the cutting slot 3. Similarly, it can also hinder the escape of hair to a certain extent and improve the hair cutting efficiency.

In the present embodiment, the tooth slot line 301 has a shape of a continuous curve to ensure that the wall surface of the cutting slot 3 transitions smoothly in the extending direction of the tooth slot line 301 and ensure the rigidity here.

Specifically, the tooth slot line 301 has a shape of a plurality of continuously interconnected arcs. Optionally, the slope of the tooth slot line 301 in the corresponding cross-section changes continuously. Taking the XY coordinate system in FIG. 11 or FIG. 12 as an example, from the bottom surface to the top surface of the cutting tooth 2, the slope k of the tooth slot line 301 increases rapidly at least in a section between k=tan5° and k=tan75°. In an accumulating direction from the bottom surface to the top surface of the cutting tooth 2, its accumulated thickness increases rapidly, and this change is non-linear. Therefore, when the cutting edge 201 corresponding to this location is made very sharp, for example, when the cutting angle of the cutting edge is as small as 5°, the thickness of other parts of the cutting tooth 2 can be increased rapidly, which effectively improves the overall rigidity of the blade.

In the present embodiment, a direction from the bottom of the cutting slot 3 to the mouth of the cutting slot 3 is a second direction, and the width of the cutting slot 3 first increases and then decreases along the second direction. The width at the mouth of the cutting slot 3 is smaller, and the hair entering the cutting slot 3 will be limited by the mouth of the cutting slot 3, which can ensure that the hair entering the cutting slot 3 is effectively cut before being discharged, therefore further improving the hair cutting efficiency.

Specifically, as shown in FIG. 14, the directions indicated by the arrows are the directions of the forces applied to the hairs. The one on the left is the shape of the cutting slot in the related art, which is overall V-shaped. Such a structure of the cutting slot will push the uncut hairs entering the cutting slot 3 out of the cutting slot 3 during operation, thereby adversely affecting the shearing efficiency. The one on the right is the shape of the cutting slot 3 of the present embodiment. The cutting slot 3 of the present embodiment is overall convergent enclosing, and the slopes of the tangent lines at each point on the cutting edge 201 are different. The cutting slot 3 overall has a tendency to collect hairs. During operation, the cutting slot 3 of the present embodiment will push the uncut hairs entering the cutting slot 3 toward the center of the cutting slot 3. Compared with the cutting slot in the related art, the cutting slot 3 of the present embodiment can ensure that the hairs entering the cutting slot 3 are more fully cut.

It should be noted that the shape of the cutting slot 3 on the right side of FIG. 14 is only a schematic diagram of the shape of the cutting slot 3 of the embodiment. The side wall of the cutting slot 3 is not limited to the bending degree shown in the figure, and the bending degree of the side wall of the cutting slot 3 can also be smaller or larger than that shown in the figure, as long as it can form a convergent enclosing shape and improve the hair collecting effect.

It can be understood that, as an alternative embodiment, the cutting edge 201 can also be U-shaped. To further improve the rigidity of the cutting tooth, the wall surface of the cutting slot 3 is a continuous curved surface or a continuous arc surface surrounding the cutting edge 201. When the wall surface of the cutting slot 3 is a continuous arc surface or a continuous curved surface surrounding the cutting edge 201, the contour of the cutting edge 201 can also be parabolic, major arc, or arch-shaped, etc., as long as it can meet the usage requirements.

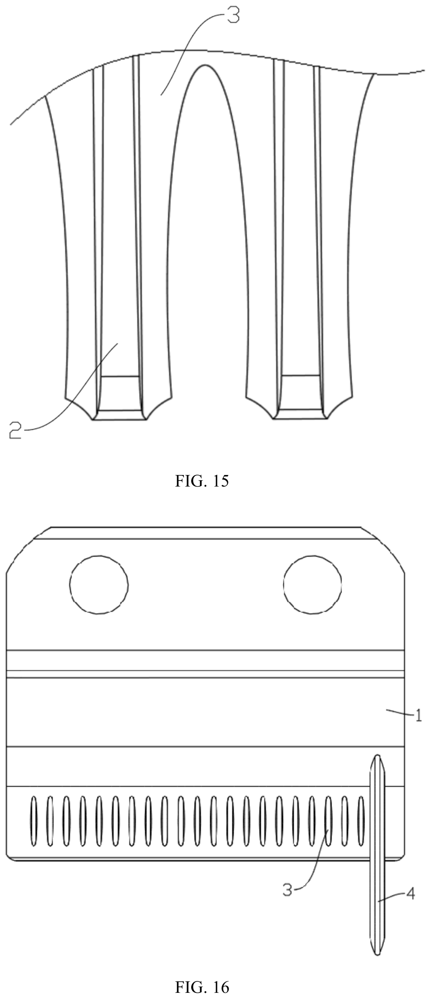

In the present embodiment, as shown in FIG. 15, the end of the cutting tooth 2 can also be set to be outwardly flared. The end of the cutting tooth 2 with such a structure can guide the hairs into the cutting slot 3, thereby further improving the hair cutting efficiency.

The shaving blade of the present embodiment can be applied in fields such as personal care, hairdressing, pets, and medical treatment. The shaving blade can be applied to rotary shavers or reciprocating shavers. Optionally, the shaving blades shown in the accompanying drawings are all reciprocating shaving blades. Since the main improvement of the present application lies in the cutting tooth part, the structure of the cutting tooth of the present embodiment can be applied to both rotary shaving blades and reciprocating shaving blades, and the rotary shaving blade will not be repeated here.

According to an embodiment of the present application, in a second aspect, a method for manufacturing a shaving blade is provided, which is used for manufacturing the above-mentioned shaving blade. The method comprises:
manufacturing a blade body 1; and
forming cutting teeth 2 by cutting on the blade body 1 with a cutting wheel 4;
wherein a diameter of the cutting wheel 4 is less than or equal to 80 mm, a cutting slot 3 is formed between every two adjacent cutting teeth 2, and a wall surface of the cutting slot 3 extends from a lower end surface of each cutting tooth toward an upper end surface thereof and forms a continuous curved surface, the wall surface of the cutting slot 3 intersects with a plane perpendicular to the lower end surface to form a tooth slot line 301, and a slope at each point on the tooth slot line 301 relative to the lower end surface of the cutting tooth gradually increases along a direction away from the cutting edge 201.

In the present embodiment, in the step of forming the cutting teeth 2 by cutting on the blade body 1 with the cutting wheel 4, the cutting angle corresponding to each point on the cutting edge 201 of the cutting tooth 2 is less than 75°.

Specifically, in the related art, a cutting wheel 4 with a relatively large diameter or stamping is usually used to process the cutting teeth 2. When processing with a cutting wheel 4 with a relatively large diameter, the cutting angle of the middle part and the mouth part of the cutting slot 3 is generally above 80°, and the sharpness is poor. When processing by stamping, the side wall of the cutting slot 3 is generally a planar surface, so the slope of the tooth slot line 301 cannot be changed. Meanwhile, stamping acute angles has very high requirements on the mold, the punch head becomes a wearing part, the processing cost is high, and the quality is prone to problems. Therefore, the cost of stamping acute angles is much higher than the cost of cutting teeth with the cutting wheel 4. Compared with the manufacturing method in the related art, the cutting wheel 4 used in the manufacturing method of the present embodiment has a smaller diameter, which can process the cutting angle to be smaller, and can also make both the inner wall of the cutting slot 3 and the cutting edge 201 have a certain radian.

Further, the specific type of the cutting wheel 4 is not limited, as long as it can perform reliable cutting operations.

Optionally, the diameter of the cutting wheel 4 is greater than or equal to 17 mm and less than or equal to 80 mm, and the type of the cutting wheel 4 is a grinding wheel.

In the present embodiment, in the step of forming the cutting teeth 2 by cutting on the blade body 1 with the cutting wheel 4:
the cutting wheel 4 cuts on the blade body 1 to form the cutting slots 3, the cutting teeth 2 are each formed between every two adjacent cutting slots 3, the cutting wheel 4 is fed from a bottom of the cutting slot 3 toward a mouth of the cutting slot 3, and the cutting wheel 4 is moved along an inclined path toward a lower end of an end portion of each cutting tooth 2 during the feeding process; and/or, a rotating speed of the cutting wheel 4 is 3000 r/min to 5000 r/min, and a cutting feed speed of the cutting wheel 4 is 0.1 mm/min to 10 mm/min.

Specifically, high-precision digitally controlled cylindrical grinding and tooth cutting equipment is used for precision cutting of the tooth profile. The cutting edge profile of the precision-cut product forms an undercut, wherein the width of the cross-section of the tooth tip is greater than the width of the middle cross-section of the tooth profile. The cutting wheel grinds from the upper surface of the blank, the feeding direction of the cutting wheel faces the slot mouth and is moved along an inclined path toward the lower edge of the toothed leading edge. The consistency of the tooth profile width dimension is within 0.05 mm, and the consistency of the tooth depth dimension is within 0.15 mm.

In the present embodiment, the step of manufacturing the blade body 1 comprises:
preparing a blank; and processing the blank into the blade body 1 according to external dimensions of the blade body 1.

Specifically, a metal sheet with a thickness of 2 mm is taken as an example of the size specification of the blank in the present embodiment, and the blank is processed into the blade body 1 by stamping and blanking. High-precision continuous molds are used for precision stamping and blanking of the product shape and round holes. A 160T high-precision equipment is used as the punch press to complete the processing. The external dimensions of the stamped blank are 33*36*2 mm. In actual production, the production efficiency can reach about 10,000 to 15,000 pieces per shift. In coordination with the subsequent tooth profile processing, two tooth profile auxiliary schemes can be adopted in this step: blanking processing without tooth cutting, or processing with preliminary rough tooth cutting. When performing preliminary rough tooth cutting, a tooth punching function is added to the punch mold for rough cutting and blanking of the product tooth profile. The blanked tooth profile reserves a cutting allowance of more than 0.1 mm on each side as compared with the tooth profile to be cut, so as to reduce cutting pressure and improve tooth cutting efficiency.

Optionally, the surface of the blank is smooth, free of defects, pitting, oil stains, and scratches.

In the present embodiment, the step of preparing the blank comprises:
obtaining a hardness of the blank; if the hardness of the blank is greater than or equal to a preset hardness, the blank is formed into the blade body 1; if the hardness of the blank is less than the preset hardness, the blank is subjected to heat treatment and then formed into the blade body 1.

In the present embodiment, if the hardness of the blank is less than the preset hardness, the step of subjecting the blank to heat treatment comprises:
placing the blank in a heat treatment equipment, wherein a heat treatment temperature range applied to the blank by the heat treatment equipment is 850°C to 1300°C, and a heat preservation time is greater than or equal to 30 min; and cooling the blank to a preset temperature range and then taking the blank out of the heat treatment equipment, wherein the preset temperature range is room temperature to 65°C.

Specifically, the heat treatment is vacuum heat treatment. The blank is placed in a heat treatment furnace for vacuum heat treatment. The furnace temperature is between 1200±5°C, the heat preservation time is 35 min, and nitrogen is used for rapid cooling. The blank is taken out of the furnace when it reaches the cooling temperature of 40-60°C, and precise setting control is performed. The above heat treatment processing parameters will be input into the heat treatment control system, and the equipment will complete the processing according to the input processing parameters. With such settings, the hardness is precisely controlled and stable. For example, the hardness of 420J2 material can be controlled between HRC52 and HRC56. In this step, the production efficiency can process about 15,000 pieces per furnace. The use of vacuum heat treatment can ensure that the product hardness and deformation are in an ideal state and ensure product consistency.

Specifically, after the blank is formed into the blade body 1, surface rough polishing is also required to remove burrs on the surface. Centrifugal tumbling equipment is used for polishing processing, and the rotating speed of the polishing wheel is 40-70 r/min. In this step, the production efficiency is about 10,000 pieces per shift.

In the present embodiment, after the step of forming the cutting teeth 2 by cutting on the blade body 1 with the cutting wheel 4, the method further comprises:
grinding surfaces of the cutting teeth to make the flatness and surface roughness of the surfaces of the cutting teeth 2 reach a preset flatness and a preset surface roughness.

Specifically, the grinding comprises surface precision polishing and tooth surface precision grinding. Surface precision polishing uses precision polishing equipment to remove burrs on the product tooth profile. The precision polishing equipment is centrifugal tumbling equipment, and a drum rotating speed of the specific polishing machine is 40-70 r/min. Tooth surface precision grinding is mainly for grinding the cutting edge surface. High-precision digitally controlled grinding equipment is used for precision grinding production of the cutting edge surface. The high-precision digitally controlled grinding equipment is a high-precision 910 digitally controlled grinding equipment, including three process steps: rough grinding, semi-precision grinding, and precision grinding. The flatness of the shear surface after grinding can be controlled within 0.01, the height difference of the grinding surface at the tooth profile position of the shear surface, that is, the straightness tolerance, can be controlled within ±0.008, and the roughness of the grinding surface can be controlled at about Ra0.06.

In the present embodiment, after the grinding step, cleaning, drying, and appearance inspection and selection are also required. In cleaning and drying, ultrasonic cleaning is used to remove residual grinding stains on the product surface. In appearance inspection and selection, manual visual inspection is used to pick out defective products with appearance defects, so as to ensure that the finished products are free of broken tooth, crooked tooth, indentations, scratches, rust, stains, deformation, etc.

Hereinafter, the entire process of the manufacturing method of the shaving blade of the present embodiment will be described using a metal sheet with a thickness of 2.8 mm as the blank:
Step 1: Material preparation. Prepare a metal sheet with a material thickness of 2.8 mm, requiring a smooth surface free of defects, pitting, oil stains, and scratches.
Step 2: Stamping and blanking forming. High-precision continuous molds are used for precision stamping and blanking of the product shape and round holes. A 160T high-precision equipment is used as the punch press to complete the processing. The external dimensions of the stamped blank are 33*36*2.8 mm. Similarly, in coordination with the subsequent tooth profile processing, two auxiliary schemes can be adopted in this step: blanking processing without tooth cutting, or processing with preliminary rough tooth cutting. Similarly, when a tooth punching function is added to the punch mold for rough cutting and blanking of the product tooth profile, the blanked tooth profile reserves a cutting allowance of more than 0.1 mm on each side as compared with the tooth profile to be cut, so as to reduce cutting pressure and improve tooth cutting efficiency.
Step 3: Vacuum heat treatment. Place the blank obtained in Step 2 in a heat treatment furnace for vacuum heat treatment. The furnace temperature is between 900±5°C, the heat preservation time is 55 min, and nitrogen is used for rapid cooling. The blank is taken out of the furnace when it reaches the cooling temperature of 50±5°C. Precise setting control is performed: the above heat treatment processing parameters will be input into the heat treatment control system, and the equipment will complete the processing according to the input processing parameters. The hardness is precisely controlled and stable during the processing.
Step 4: Surface rough polishing. Use centrifugal tumbling equipment for polishing processing, and the rotating speed of the polishing wheel is 40-70 r/min.
Step 5: Precision cutting of tooth profile. High-precision digitally controlled cylindrical grinding and tooth cutting equipment is used for precision cutting of the tooth profile. The diameter of the cutting wheel 4 is between 17 mm and 80 mm; the rotating speed of the cutting wheel 4 is 600-1000 r/min, the cutting feed speed is 10 mm/min, and the cutting edge angle of the processed and formed product ranges from 5° to 75°. The feeding direction of the cutting wheel 4 is toward the slot mouth and moving along an inclined path toward the lower edge of the toothed leading edge as in the above embodiment, or can be fed from the slot mouth toward the slot bottom. Similarly, the consistency of the tooth profile width dimension is within 0.05 mm, and the consistency of the tooth depth dimension is within 0.15 mm.
Step 6: Surface precision polishing. Use precision polishing equipment to remove burrs on the product tooth profile. The precision polishing equipment is centrifugal tumbling equipment, and the drum rotating speed of the specific polishing machine is 40-70 r/min.
Step 7: Tooth surface precision grinding. High-precision digitally controlled grinding equipment is used for precision grinding production of the cutting edge surface. The high-precision digitally controlled grinding equipment is a high-precision 910 digitally controlled grinding equipment, including three process steps: rough grinding, semi-precision grinding, and precision grinding. The flatness of the shear surface after grinding is controlled within 0.01. The height difference of the grinding surface at the tooth profile position of the shear surface is controlled within ±0.008, and the roughness of the grinding surface can be controlled at about Ra0.06.
Step 8: Cleaning and drying. Use ultrasonic cleaning to remove residual grinding stains on the product surface.
Step 9: Appearance inspection and selection. Use manual visual inspection to pick out defective products with appearance defects such as broken tooth, crooked tooth, indentations, scratches, rust, stains, and deformation.

Although embodiments of the present application have been described with reference to the accompanying drawings, various modifications and variations can be made by those skilled in the art without departing from the spirit and scope of the present application, and such modifications and variations all fall within the scope defined by the appended claims.

## Claims

1. A shaving blade, **characterized by** comprising:
a blade body (1);
a plurality of cutting teeth (2) arranged at intervals on the blade body (1), wherein a cutting slot (3) is formed between every two adjacent cutting teeth (2), and a wall surface of the cutting slot (3) extends from a lower end surface of each cutting tooth toward an upper end surface thereof and forms a continuous curved surface.

2. The shaving blade according to claim 1, wherein the wall surface of the cutting slot (3) is formed by a plurality of arc surfaces that are continuously interconnected.

3. The shaving blade according to claim 1 or 2, wherein the wall surface of the cutting slot (3) intersects with the lower end surface of the cutting tooth (2) to form a cutting edge (201), the included angle between a tangent line at each point on the cutting edge (201) and the lower end surface of the cutting tooth (2) is a cutting angle, the wall surface of the cutting slot (3) intersects with a plane perpendicular to the lower end surface to form a tooth slot line (301), and a slope at each point on the tooth slot line (301) relative to the lower end surface of the cutting tooth (2) gradually increases along a direction away from the cutting edge (201), so that the cutting tooth (2) maintains sharpness while having a corresponding thickness.

4. The shaving blade according to claim 3, wherein the cutting angle corresponding to each point on the cutting edge (201) is less than 75°.

5. The shaving blade according to claim 3, wherein a direction from a mouth of the cutting slot (3) to a bottom of the cutting slot (3) is a first direction, and the cutting angle corresponding to each point on the cutting edge (201) changes continuously along the first direction.

6. The shaving blade according to claim 5, wherein the cutting angle corresponding to each point on the cutting edge (201) gradually decreases along the first direction,
or, the cutting angle corresponding to each point on the cutting edge (201) first gradually decreases and then gradually increases along the first direction.

7. The shaving blade according to claim 3, wherein the cutting edge (201) has a shape of a continuous curve.

8. A method for manufacturing a shaving blade, used for manufacturing the shaving blade according to any one of claims 1 to 7, **characterized by** comprising:
manufacturing a blade body (1); and
forming cutting teeth (2) by cutting on the blade body (1) with a cutting wheel (4);
wherein a diameter of the cutting wheel (4) is less than or equal to 80 mm, a cutting slot (3) is formed between every two adjacent cutting teeth (2), and a wall surface of the cutting slot (3) extends from a lower end surface of each cutting tooth toward an upper end surface thereof and forms a continuous curved surface.

9. The method for manufacturing a shaving blade according to claim 8, wherein, in the step of forming the cutting teeth (2) by cutting on the blade body (1) with the cutting wheel (4),
the cutting wheel (4) cuts on the blade body (1) to form the cutting slots (3), the cutting teeth (2) are each formed between every two adjacent cutting slots (3), the cutting wheel (4) is fed from a bottom of the cutting slot (3) toward a mouth of the cutting slot (3), and the cutting wheel (4) is moved along an inclined path toward a lower end of an end portion of each cutting tooth (2) during the feeding process,
and/or, a rotating speed of the cutting wheel (4) is 3000 r/min to 5000 r/min, and a cutting feed speed of the cutting wheel (4) is 0.1 mm/min to 10 mm/min.

10. The method for manufacturing a shaving blade according to claim 8 or 9, wherein the step of manufacturing the blade body (1) comprises:
preparing a blank; and
processing the blank into the blade body (1) according to external dimensions of the blade body (1).

11. The method for manufacturing a shaving blade according to claim 10, wherein the step of preparing the blank comprises:
obtaining a hardness of the blank;
if the hardness of the blank is greater than or equal to a preset hardness, the blank is formed into the blade body (1);
if the hardness of the blank is less than the preset hardness, the blank is subjected to heat treatment and then formed into the blade body (1).

12. The method for manufacturing a shaving blade according to claim 11, wherein, if the hardness of the blank is less than the preset hardness, the step of subjecting the blank to heat treatment comprises:
placing the blank in a heat treatment equipment, wherein a heat treatment temperature range applied to the blank by the heat treatment equipment is 850°C to 1300°C, and a heat preservation time is greater than or equal to 30min; and
cooling the blank to a preset temperature range and then taking the blank out of the heat treatment equipment, wherein the preset temperature range is room temperature to 65°C.

13. The method for manufacturing a shaving blade according to claim 8 or 9, after the step of forming the cutting teeth (2) by cutting on the blade body (1) with the cutting wheel (4), the method further comprises:
grinding surfaces of the cutting teeth (2) to make the flatness and surface roughness of the surfaces of the cutting teeth (2) reach a preset flatness and a preset surface roughness.
